# EUROPEAN PATENT APPLICATION

(11) **EP 3 470 385 A1**
(43) Date of publication of application: **17.04.2019**
(21) Application number: 17813274.2
(22) Date of filing: 12.06.2017
(51) Int. Cl.: C04B 35/573, C01B 32/956

(54) **SILICON CARBIDE PRODUCTION METHOD AND SILICON CARBIDE COMPOSITE MATERIAL**

(30) Priority: 13.06.2016 JP 2016117148; 26.12.2016 JP 2016251418
(71) Applicant: Teijin Limited, Osaka-shi, Osaka 530-0005 (JP)
(72) Inventor: MAEDA, Masanori, Osaka-shi Osaka 530-0005 (JP); KOHNO, Azusa, Osaka-shi Osaka 530-0005 (JP); IKEDA, Yoshinori, Osaka-shi Osaka 530-0005 (JP)
(74) Representative: Cockerton, Bruce Roger
(86) International application number: PCT/JP2017/021687
(87) International publication number: WO 2017/217378

(57) **Abstract**

Provided is a method for producing a novel silicon carbide that can be reacted at a low reaction temperature. The present invention pertains to a silicon carbide production method comprising a step for sintering a composition that at least contains: silicon nanoparticles having an average particle diameter of less than 200 nm; and a carbon-based material.

## Description

### FIELD

The present invention relates to a silicon carbide production method and a silicon carbide composite material.

### BACKGROUND

Silicon carbide is known as a material that has high thermal conductivity and high mechanical strength, and is used in applications such as corrosion-resistant members used under a high-temperature condition, various types of crucibles and heat exchanger heat transfer pipes. In addition, silicon carbide has recently attracted attention as material for use in power semiconductors.

Silicon carbide does not exist naturally. Silicon carbide is known to be conventionally produced according to the Acheson process consisting of sintering silicon dioxide and a carbon-based material in a reducing atmosphere. Raising the sintering temperature to about 1500°C allows to obtain β-type silicon carbide having a β-type crystal structure, while increasing the sintering temperature to about 2000°C allows to obtain α-type silicon carbide having an α-type crystal structure which is stable in the high temperature region and has high thermal conductivity.

In addition, Patent Document 1 to Patent Document 3 disclose methods for producing silicon carbide that use powdered silicon instead of silicon dioxide. Powdered silicon having a comparatively large particle diameter is used in these methods.

### [CITATION LIST]

### [PATENT DOCUMENTS]

[Patent Document 1] JP2001-247381A
[Patent Document 2] JP2001-199767A
[Patent Document 3] JP2011-243412A

### SUMMARY

### [TECHNICAL PROBLEM]

An object of the present invention is to provide a novel method for producing silicon carbide enabling silicon carbide to be produced at a low sintering temperature. In addition, the present invention relates to a silicon carbide composite material having high thermal conductivity that can be produced according to this production method.

### [SOLUTION TO PROBLEM]

The inventors of the present invention found that the aforementioned problems can be solved by the present invention having the aspects indicated below.

### <<Aspect 1>>

A silicon carbide production method, comprising: sintering a composition at least containing silicon nanoparticles having an average particle diameter of less than 200 nm and a carbon-based material.

### <<Aspect 2>>

The production method described in Aspect 1, wherein the silicon nanoparticles are doped with boron.

### <<Aspect 3>>

The production method described in Aspect 2, wherein the boron-doped silicon nanoparticles contain boron within a range of 10¹⁸ atoms/cm³ to 10²² atoms/cm³.

### <<Aspect 4>>

The production method described in any of Aspects 1 to 3, wherein the carbon-based material is fibrous carbon.

### <<Aspect 5>>

The production method described in Aspect 4, wherein the fibrous carbon consists of carbon nanofibers having a diameter of 100 nm to 900 nm.

### <<Aspect 6>>

The production method described in any of Aspects 1 to 5, wherein the composition further contains a third component selected from the group consisting of silicon particles, silicon carbide particles, silicon nitride particles, silica particles, aluminum carbide particles, aluminum nitride particles, alumina particles, boron nitride particles, boron oxide particles, boron carbide particles, carbon fibers and mixtures thereof.

### <<Aspect 7>>

The production method described in any of Aspects 4 to 6, wherein thermal conductivity of the fibrous carbon is 80 W/(m·K) to 1000 W/(m·K).

### <<Aspect 8>>

The production method described in any of Aspects 4 to 7, for obtaining a silicon carbide composite material containing fibrous carbon, in which the number of moles of silicon in the silicon nanoparticles is lower than the number of moles of carbon in the fibrous carbon.

### <<Aspect 9>>

A silicon carbide sintering composition at least containing silicon nanoparticles having an average particle diameter of less than 200 nm and a carbon-based material.

### <<Aspect 10>>

A silicon carbide composite material containing silicon carbide and fibrous carbon dispersed in the silicon carbide.

### [ADVANTAGEOUS EFFECTS OF INVENTION]

According to the present invention, a novel silicon carbide production method can be provided that enables the production of silicon carbide having a low sintering temperature. In addition, according to the present invention, a silicon carbide composite material can be obtained that has high thermal conductivity.

### BRIEF DESCRIPTION OF DRAWINGS

Fig. 1 is an SEM micrograph of a cross-section of a sintered body obtained in Example 9.
Fig. 2 is an SEM micrograph of a cross-section of a sintered body obtained in Example 10.

### DESCRIPTION OF EMBODIMENTS

### <<Silicon Carbide Production Method>>

The silicon carbide production method of the present invention comprises sintering a composition at least containing silicon nanoparticles having an average particle diameter of less than 200 nm and a carbon-based material. The resulting silicon carbide is only required to be a material that contains silicon carbide, and for example, a silicon carbide composite material containing silicon carbide and fibrous carbon dispersed in the silicon carbide may be obtained according to this method.

The resulting silicon carbide may be α-type silicon carbide or β-type silicon carbide. The sintering temperature for obtaining α-type silicon carbide may be 1800°C or higher, 1900°C or higher, 2000°C or higher, 2100°C or higher or 2200°C or higher and 2500°C or lower, 2300°C or lower or 2100°C or lower. The sintering temperature for obtaining β-type silicon carbide may be 1300°C or higher, 1350°C or higher, 1400°C or higher or 1500°C or higher and 1800°C or lower, 1600°C or lower, 1500°C or lower or 1400°C or lower.

Sintering is preferably carried out in a sintering atmosphere consisting of, for example, gaseous argon, gaseous nitrogen or other inert atmosphere in order to adequately allow the raw material silicon nanoparticles and carbon-based material to react. In addition, among these, sintering is preferably carried out in a gaseous argon atmosphere in order to prevent the formation of nitrides and the like. The sintering time is preferably the amount of time until the raw material silicon nanoparticles and carbon-based material adequately react, and may be, for example, 10 minutes or more, 30 minutes or more, 1 hour or more or 2 hours or more and 1 day or less, 12 hours or less, 6 hours or less, 3 hours or less, 2 hours or less or 1 hour or less.

Substantially pure silicon carbide may be obtained by making the ratio between the number of moles of silicon in the silicon nanoparticles and the number of moles of carbon in the carbon-based material to be 1:1; a silicon carbide composite material containing silicon carbide and silicon may be obtained by making the number of moles of silicon in the silicon nanoparticles to be more than the number of moles of carbon in the carbon-based material; or a silicon carbide composite material containing silicon carbide and a carbon-based material may be obtained by making the number of moles of silicon in the silicon nanoparticles less than the number of moles of carbon in the carbon-based material.

The ratio of the number of moles of silicon in the silicon nanoparticles to the number of moles of carbon in the carbon-based material (silicon/carbon) may be 0.10 or more, 0.30 or more, 0.50 or more, 1.0 or more or 2.0 or more and 10.0 or less, 5.0 or less, 3.0 or less, 2.0 or less, 1.0 or less or 0.50 or less.

The silicon carbide production method of the present invention may comprise a step of obtaining silicon nanoparticles having an average particle diameter of less than 200 nm by laser pyrolysis prior to the aforementioned sintering step. This step may consist of a step of obtaining silicon nanoparticles by laser pyrolysis described in JP2010-514585A. This document is incorporated in the present description by reference.

In addition, the silicon carbide production method of the present invention may further comprise a step of obtaining a sintering composition at least containing silicon nanoparticles and a carbon-based material. This composition may further contain a solvent or the silicon nanoparticles and carbon-based material may be dispersed in that solvent. In the step of obtaining a sintering composition, although there are no particular limitations on the form thereof provided the silicon nanoparticles and carbon-based materials can be substantially mixed homogeneously, the silicon nanoparticles may be supplied, for example, in the form of a silicon nanoparticle dispersion containing silicon nanoparticles and the dispersion medium. The sintering composition may then be obtained by adding a carbon-based material to the silicon nanoparticle dispersion followed by mixing these components with a planetary mixer and the like. The sintering composition may also contain a third component other than the silicon nanoparticles and carbon-based material, and for example, inorganic particles (such as silicon particles, silicon carbide particles, silicon nitride particles, silica particles, aluminum carbide particles, aluminum nitride particles, alumina particles, boron nitride particles, boron oxide particles or boron carbide particles) or carbon fibers may be contained.

In an embodiment using a sintering composition obtained by mixing a carbon-based material into a silicon nanoparticle dispersion, the silicon carbide production method of the present invention may further comprise a step of removing the solvent.

The silicon carbide production method of the present invention may further comprise a step of molding the sintering composition containing silicon nanoparticles and a carbon-based material into a prescribed shape. Examples of molding means include uniaxial pressure molding process, in which the sintering composition is placed in a metal mold and subjected to pressure molding, hot pressing process and cold isostatic pressing (CIP) process.

Although the molding temperature can be suitably selected corresponding to the molding means, molding is preferably carried out at room temperature. Molding pressure may be, for example, 10 MPa or more, 30 MPa or more, 50 MPa or more, 100 MPa or more or 200 MPa or more and 900 MPa or less, 800 MPa or less, 600 MPa or less, 400 MPa or less or 200 MPa or less. In addition, there are no particular limitations on the molded shape, and the sintering composition can be processed into an arbitrary shape corresponding to the application to which the resulting silicon carbide is applied.

In order to obtain denser silicon carbide, pressure molding by CIP is preferably carried out after having produced a compact of silicon and carbon, followed by sintering under pressurization conditions of 200 MPa or less by hot isostatic pressing (HIP) and the like. In addition, sintering is also preferably carried out by adding a mixed powder of silicon and carbon to a mold and sintering under pressurization conditions by hot pressing. Pressure during hot pressing may be 10 MPa or more, 30 MPa or more, 50 MPa or more, 100 MPa or more or 200 MPa or more and 900 MPa or less, 800 MPa or less, 600 MPa or less, 400 MPa or less or 200 MPa or less. Sintering temperature at this time may be 1800°C or higher, 1900°C or higher, 2000°C or higher, 2100°C or higher or 2200°C or higher and 2500°C or lower, 2300°C or lower or 2100°C or lower in order to obtain α-type silicon carbide. In addition, sintering temperature may be 1300°C or higher, 1350°C or higher, 1400°C or higher or 1500°C or higher and 1800°C or lower, 1600°C or lower, 1500°C or lower or 1400°C or lower in order to obtain β-type silicon carbide.

Bulk density of the silicon carbide or silicon carbide composite material obtained according to the method of the present invention may be 2.50 g/cm³ or more, 2.70 g/cm³ or more, 2.90 g/cm³ or more or 3.10 g/cm³ or more and 4.00 g/cm³ or less, 3.50 g/cm³ or less, 3.20 g/cm³ or less or 3.00 g/cm³ or less. In the case bulk density is high, bending strength and thermal conductivity of the sintered body increase due to fewer voids and other defects in the sintered body, thereby making this preferable.

### <Silicon Nanoparticles>

The inventors of the present invention found that silicon carbide can be obtained even at a low sintering temperature by sintering with a carbon-based material using silicon nanoparticles having an average particle diameter of less than 200 nm. Without being bound by theory, the reason for being able to obtain silicon carbide at a low sintering temperature is thought to be an increase in the number of reaction sites with the carbon-based material as a result of using silicon nanoparticles having a small average particle diameter, thereby enabling the reaction to proceed easily.

The specific reaction temperature between the silicon nanoparticles and carbon-based material can be monitored in the form of an exothermic reaction with a thermogravimetric-differential thermal analyzer and the like. Since chemical reactions proceed more readily by reducing particle size, and particularly by reducing to the level of nanometers, the effect of lowering reaction temperature is obtained. For example, the decrease in reaction temperature in the case of using silicon nanoparticles is preferably 10 degrees or more, more preferably 20 degrees or more and most preferably 30 degrees or more in comparison with the case of using particles having a size at the micrometer level. Moreover, reducing average particle diameter can have an effect on the sintering temperature of SiC. For example, the use of silicon particles having a small average particle diameter allows to obtain a dense SiC sintered body in a shorter period of time for the same sintering temperature. Alternatively, the use of silicon particles having a small average particle diameter allows to obtain a SiC sintered body having high bulk density at a temperature that is 100 degrees to 200 degrees lower.

The average particle diameter of the silicon nanoparticles used in the present invention can be less than 200 nm, 150 nm or less, 100 nm or less, 80 nm or less, 50 nm or less, 20 nm or less, 10 nm or less or 5 nm or less. In addition, the average primary particle diameter of semiconductor particles used in the present invention may be 1 nm or more, 3 nm or more, 5 nm or more or 10 nm or more.

In the present description, the average particle diameter of a particle and the average diameter of a fiber can be determined as the number average primary article diameter by directly measuring the projected area equivalent circle diameter based on a captured image and analyzing a group of primary particles composed of 100 or more data sets by observing with a scanning electron microscope (SEM) or transmission electron microscope (TEM) and the like.

Examples of silicon nanoparticles preferably include silicon nanoparticles obtained by laser pyrolysis. Particles described in JP2010-514585A, for example, can be used for such silicon nanoparticles.

One example of a characteristic of silicon nanoparticles obtained by laser pyrolysis is the high circularity of primary particles. More specifically, circularity may be 0.80 or more, 0.90 or more, 0.93 or more, 0.95 or more, 0.97 or more, 0.98 or more or 0.99 or more. Circularity can be determined by measuring the projected area (S) and perimeter (I) of a particle from images captured by observing with a scanning electron microscope (SEM) or transmission electron microscope (TEM) and the like using image processing software and then calculating using the formula: (4πS)/I². In this case, circularity can be determined as the average value of a group of 100 particles or more.

In the present invention, silicon nanoparticles having circularity of 0.80 or more, 0.90 or more, 0.93 or more, 0.95 or more, 0.97 or more, 0.98 or more or 0.99 or more can be used preferably. The use of silicon nanoparticles having high circularity is thought to allow the reaction with the carbon-based material to proceed even more easily.

In addition, another example of a characteristic of silicon nanoparticles obtained by laser pyrolysis is the interior of the particles being in a crystalline state while the surface of the particles is in an amorphous state. As a result, unique physical properties can be imparted to various articles in which the silicon nanoparticles are used. In the present invention as well, there are cases in which such properties impart advantageous effects.

The silicon nanoparticles used in the present invention are preferably preliminarily doped with boron. The inventors of the present invention found that the crystal grain size of the resulting silicon carbide can be increased by doping the silicon nanoparticles with boron. Without being bound by theory, this is thought to be due to boron promoting crystal growth by functioning as a sintering aid.

The concentration of dopant in the silicon nanoparticles may be 10¹⁷ atoms/cm³ or more, 10¹⁸ atoms/cm³ or more, 10¹⁹ atoms/cm³ or more, or 1 × 10²⁰ atoms/cm³ or more and 1 × 10²² atoms/cm³ or less, 1 × 10²¹ atoms/cm³ or less, 1 × 10²⁰ atoms/cm³ or less or 1 × 10¹⁹ atoms/cm³ or less.

### <Carbon-Based Material>

There are no particular limitations on the carbon-based material provided it is a material that forms silicon carbide by reacting with silicon as a result of sintering. Examples of such carbon-based materials include organic polymers, carbon black, graphene, activated charcoal, graphite, acetylene black and fibrous carbon. Among these, fibrous carbon is preferably used, especially carbon fibers, carbon nanotubes and carbon nanofibers are preferably used. An example of carbon nanofibers is the fibrous carbon described in JP2010-013742A. This document is incorporated in the present description by reference, and more specifically, describes ultrafine carbon fibers able to be obtained by going through the following steps:
(1) a step of obtaining a precursor molded compact by molding a resin composition composed of a thermoplastic resin and a thermoplastic carbon precursor at an atmospheric temperature of 100°C to 400°C,
(2) a step of forming a stabilized precursor compact by stabilizing the thermoplastic carbon precursor contained in the precursor compact,
(3) a step of forming a fibrous carbon precursor by removing the thermoplastic resin from the stabilized precursor compact,
(4) a step of obtaining ultrafine carbon fibers by carbonizing or graphitizing the fibrous carbon precursor in an inert gas atmosphere, and
(5) a step of colliding a liquid containing the ultrafine carbon fibers with a high-pressure injection flow of 100 MPa or more.

A silicon carbide composite material containing silicon carbide and a fibrous carbon can be obtained by making the number of moles of silicon in the silicon nanoparticles to be less than the number of moles of carbon in the fibrous carbon. This type of silicon carbide composite material is advantageous since it has extremely high thermal conductivity derived from the fibrous carbon. In this case, a silicon carbide composite material having particularly high thermal conductivity can be obtained by aligning the direction in which heat is conducted with the direction of the fibers of the fibrous carbon.

The diameter of the fibrous carbon may be 10 nm or more, 20 nm or more, 30 nm or more, 50 nm or more, 100 nm or more, 200 nm or more, 300 nm or more or 500 nm or more and 30 µm or less, 20 µm or less, 10 µm or less, 5 µm or less or 1 µm or less.

In addition, the fibrous carbon may also be carbon nanofibers having a diameter of 1000 nm or less, 800 nm or less, 600 nm or less, 400 nm or less, 300 nm or less, 200 nm or less or 100 nm or less. Carbon nanofibers having a diameter of 100 nm to 900 nm, for example, are particularly useful.

Thermal conductivity of the fibrous carbon at room temperature may be 50 W/(m·K) or more, 80 W/(m·K) or more, 100 W/(m·K) or more, 200 W/(m·K) or more or 300 W/(m·K) or more and 1000 W/(m·K) or less, 500 W/(m·K) or less, 300 W/(m·K) or less, 200 W/(m·K) or less or 100 W/(m·K) or less.

Carbon fibers may be used for the fibrous carbon. Examples of carbon fibers include polyacrylonitrile-based carbon fibers obtained by subjecting polyacrylonitrile fibers to carbonization treatment by heating to a high temperature in a nitrogen atmosphere, and pitch-based carbon fibers. Among these, pitch-based carbon fibers are used particularly preferably.

The diameter of the carbon fibers may be 1 µm or more, 2 µm or more, 3 µm or more, 5 µm or more or 10 µm or more and 30 µm or less, 20 µm or less, 10 µm or less, 5 µm or less or 1 µm or less.

In the sintering composition of the present invention, short fibers can be used for the carbon fibers.

In the present description, short fibers refer to fibers having a length of 1 µm to 50 mm. Although there are no particular limitations thereon, the length of the short fibers of carbon fibers may be 1 µm or more, 2 µm or more, 5 µm or more, 10 µm or more, 20 µm or more or 50 µm or more and 50 mm or less, 30 mm or less, 20 mm or less, 15 mm or less, 10 mm or less, 5 mm or less, 3 mm or less or 1 mm or less. Mixing with silicon nanoparticles and subsequent sintering are facilitated in the case of carbon fibers of a suitable length.

Volume resistivity of the carbon fibers may be 1 × 10⁻⁹ Ω·cm or more, 1 × 10⁻⁶ Ω·cm or more, 1 × 10⁻⁵ Ω·cm or more or 1 × 10⁻⁴ Ω·cm or more and 1 × 10³ Ω·cm or less, 1 Ω·cm or less, 0.1 Ω·cm or less or 0.01 Ω·cm or less. A silicon carbide composite sintered body is able to have desirable electromagnetic wave absorption properties in the case of carbon fibers of a suitable volume resistivity.

Thermal conductivity of the carbon fibers at room temperature may be, for example, 50 W/(m·K) or more, 80 W/(m·K) or more, 100 W/(m·K) or more or 200 W/(m·K) or more and 1000 W/(m·K) or less, 500 W/(m·K) or less, 300 W/(m·K) or less, 200 W/(m·K) or less or 100 W/(m·K) or less.

In the present invention, the weight ratio of carbon fibers accounting for the solid content contained in the sintering composition can be 0.1% by weight or more, 0.2% by weight or more, 0.5% by weight or more, 1% by weight or more, 2% by weight or more, 5% by weight or more or 10% by weight or more and 95% by weight or less, 90% by weight or less, 80% by weight or less, 70% by weight or less, 60% by weight or less or 50% by weight or less.

### <<Silicon Carbide Sintering Composition>>

The silicon carbide sintering composition of the present invention at least contains silicon nanoparticles having an average particle diameter of less than 200 nm and a carbon-based material. The silicon nanoparticles and carbon-based material may be of the types previously described with respect to the silicon carbide production method of the present invention. In addition, the silicon carbide sintering composition of the present invention may be used in the silicon carbide production method of the present invention.

This composition may contain a solvent and there are no particular limitations on the solvent provided it is capable of dispersing the silicon nanoparticles and carbon-based material. Examples of solvents include aqueous solvents and organic solvents. Moreover, examples of aqueous solvents include water and alcohol-based solvents such as methanol, ethanol, isopropyl alcohol or butanol, while examples of organic solvents include hydrocarbon-based solvents such as toluene, xylene, hexane, cyclohexane, mesitylene or tetralin, ester-based solvents such as ethyl acetate, butyl acetate or methyl 3-methoxypropionate, and ketone-based solvents such as methyl ethyl ketone or methyl isobutyl ketone. Additional examples include amine-based solvents such as N,N-dimethylformamide, N,N-dimethylacetoamide or N-methyl-2-pyrrolidone, acetate-based solvents such as propylene glycol monomethyl ether acetate, and polar solvents such as dimethylsulfoxide. This composition may also contain a third component other than the silicon nanoparticles and carbon-based material, and may contain, for example, those types of components previously described with respect to the silicon carbide production method of the present invention.

### <<Silicon Carbide Composite Material>>

The silicon carbide composite material of the present invention contains silicon carbide and fibrous carbon dispersed in the silicon carbide. The silicon carbide and fibrous carbon may be of the types previously described with respect to the silicon carbide production method of the present invention. In addition, the silicon carbide composite material of the present invention may be obtained based on one embodiment of the silicon carbide production method of the present invention.

The silicon carbon composite material of the present invention can have high thermal conductivity, and the thermal conductivity thereof at room temperature may be 50 W/(m·K) or more, 100 W/(m·K) or more, 200 W/(m·K) or more or 300 W/(m·K) or more and 1000 W/(m·K) or less, 500 W/(m·K) or less, 300 W/(m·K) or less, 200 W/(m·K) or less or 100 W/(m·K) or less. Thus, the silicon carbide composite material of the present invention is substantially dense with few voids.

The silicon carbide composite material of the present invention can be used in, for examples, materials for heat sink substrates.

Although the following provides an explanation of preferred embodiments of the present invention based on examples thereof, the present invention is not limited to the following examples.

### EXAMPLES

### «Production Examples»

### <Example 1>

In this example, SiC was produced using silicon (Si) nanoparticles and carbon black (CB). Ink containing Nanogram (trade mark) Si Nanoparticles (dopant-free, average particle diameter: 20 nm, Item No. nSol-3002) was used for the Si nanoparticles. Carbon black (Denka Co., Ltd. (formerly Denki Kagaku Kogyo Co., Ltd.), Denka Black (trade mark), 75% pressed product) was then added to the Si nanoparticle-containing ink so that the molar ratio between Si and carbon was 50:50 to obtain an Si/CB mixed ink. This Si/CB mixed ink was added to an alumina crucible for use with a thermogravimetric-differential thermal analyzer (TG-DTA, Netzsch GmbH, specifications: STA 449F1 Jupiter) followed by drying the solvent to obtain a Si/CB powder.

This Si/CB powder was placed in the TG-DTA analyzer and the temperature was raised to 1550°C at the rate of 20°C/min in an Ar atmosphere to obtain silicon carbide (SiC).

### <Comparative Example 1>

β-SiC was obtained in the same manner as Example 1 with the exception of using micron-order Si particles obtained by crushing process (Nisshin Kasei Co., Ltd., particle diameter: 0.3 µm to 3.0 µm) instead of Si nanoparticles.

### <Example 2>

Carbon nanofibers (CNF, average particle diameter: 250 nm) were added to 10 g (0.0427 mol) of Nanogram (trade mark) Boron-Doped Si Nanoparticle-Containing Paste (boron dopant, average particle diameter: 20 nm, Item No. nSol-3202) so that Si:C = 50:50 (molar ratio) to obtain a mixture.

The carbon nanofibers used here were produced in compliance with the method described in JP2010-013742A, had a fiber diameter of 200 nm to 500 nm, had hardly any fiber aggregates formed by fused fibers, and demonstrated extremely superior dispersibility.

The aforementioned mixture was stirred for 20 minutes at 2000 rpm with a planetary mixer (Awatori Rentaro (trade mark), Thinky Corp.) followed by degassing for 3 minutes at 2200 rpm to obtain a Si/CNF mixed paste. The solvent present in the Si/CNF mixed paste was then distilled off to obtain Si/CNF powder. After weighing out 0.4 g of the aforementioned powder and crushing in a mortar, the powder was filled into a molding jig and subjected to uniaxial pressure molding in a vacuum for 2 hours at about 700 MPa to obtain a Si/CNF compact having a diameter of φ13 mm and thickness of 2.2 mm. The resulting compact was sintered for 1 hour at 1500°C in the presence of an Ar flow.

### <Example 3>

β-SiC was obtained in the same manner as Example 2 with the exception of changing the molar ratio of Si:C to 75:25.

### <Example 4>

β-SiC was obtained in the same manner as Example 2 with the exception of changing the molar ratio of Si:C to 25:75.

### <Example 5>

β-SiC was obtained in the same manner as Example 2 with the exception of changing the carbon nanofibers to carbon black (Denka Co., Ltd. (formerly Denki Kagaku Kogyo Co., Ltd.), Denka Black (trade mark), 75% pressed product).

### <Example 6>

β-SiC was obtained in the same manner as Example 3 with the exception of changing the carbon nanofibers to carbon black (Denka Co., Ltd. (formerly Denki Kagaku Kogyo Co., Ltd.), Denka Black (trade mark), 75% pressed product).

### <Example 7>

β-SiC was obtained in the same manner as Example 4 with the exception of changing the carbon nanofibers to carbon black (Denka Co., Ltd. (formerly Denki Kagaku Kogyo Co., Ltd.), Denka Black (trade mark), 75% pressed product).

### <Example 8>

β-SiC was obtained in the same manner as Example 2 with the exception of changing the Nanogram (trade mark) Boron-Doped Si Nanoparticle-Containing Paste to Nanogram (trade mark) Si Nanoparticle-Containing Ink (dopant-free, average particle diameter: 20 nm, Item No. nSol-3002).

### <<Evaluation>>

The temperature at which an endothermic peak was observed on a DTA curve, namely the temperature at which the Si nanoparticles and CB react, was confirmed for Example 1 and Comparative Example 1.

In addition, peak intensity derived from β-SiC in the vicinity of 2θ = 35.6° was measured for all of the aforementioned examples by powder X-ray diffractometry (XRD, Rigaku Corp., Sample Horizontal High-Intensity Diffractometer: RINT TTR III) and crystal size thereof was calculated according to the Scherrer equation.

### <<Results>>

The results of the aforementioned evaluations are shown in Table 1.

**[Table 1]**

| | Si particles | C material | Si/C [mol/mol] | Boron doping | Sintering conditions | Reaction temp. (°C) | Crystal size (angstrom) |
|---|---|---|---|---|---|---|---|
| Ex.1 | Nano | CB | 50/50 | × | heating at 1550°C, 20°C/min | 1333 | 219 |
| Comp. Ex.1 | Micron | CB | 50/50 | × | | 1367 | 241 |
| Ex.2 | Nano | CNF | 50/50 | ○ | 1500°C, 1hr | - | 224 |
| Ex.3 | Nano | CNF | 75/25 | ○ | | - | 315 |
| Ex.4 | Nano | CNF | 25/75 | ○ | | - | 168 |
| Ex.5 | Nano | CB | 50/50 | ○ | | - | 119 |
| Ex.6 | Nano | CB | 75/25 | ○ | | - | 186 |
| Ex.7 | Nano | CB | 25/75 | ○ | | - | 111 |
| Ex.8 | Nano | CNF | 50/50 | × | | - | 136 |

When a comparison was made between Example 1 and Comparative Example 1, it was found that, in the case of having used Si nanoparticles, SiC was obtained at a lower temperature than in the case of having used Si particles on the micron order.

Furthermore, although the melting peak temperature of Si is normally observed in the vicinity of 1415°C, since this was not confirmed, it was suggested that the entire amount of Si was converted to SiC as a result of reacting with CB.

When a comparison was made between Example 2 and Example 8, SiC crystal size was determined to increase as a result of boron doping. In addition, when a comparison was made between Examples 2 to 4 and Examples 5 to 7, it was found that in the case of having used carbon nanofibers, SiC crystal size becomes larger than in the case of having used carbon black.

### <Example 9>

A SiC sintered body was obtained by subjecting the same boron-doped Si nanoparticle/CNF mixture (molar ratio Si:C = 1:1) as that used in Example 2 to pressure sintering for 20 minutes at 2000°C and 40 MPa in an Ar atmosphere using a hot press (HP-10X10-CC-23, Nems Co., Ltd.).

### <Example 10>

A SiC sintered body was obtained by adding α-Si powder (OY-15, Yakushima Denko Co., Ltd.) to the same boron-doped Si nanoparticle/CNF mixture as that used in Example 2 so that Si:C:SiC = 1:1:5 (molar ratio) and carrying out pressure sintering for 60 minutes at 2000°C and 40 MPa in an Ar atmosphere by using the same hot press as that used in Example 9.

### «Evaluation»

The SiC sintered bodies obtained in Examples 9 and 10 were subjected to surface polishing followed by calculation of bulk density of the sintered bodies from outer volume and measured weight. In addition, cross-sectional structure of the sintered bodies was observed with a field emission-type scanning electron microscope (SEM, S-5200, Hitachi, Ltd.).

### <<Results>>

The results of evaluating bulk density are shown in Table 2. High bulk density indicates that there are few voids and other defects present in the sintered body and that high bending strength and thermal conductivity can be expected.

**[Table 2]**

| | Si:C:SiC [Raw material molar ratio] | Sintering conditions | Sintering time [min] | Bulk density [g/cm³] |
|---|---|---|---|---|
| Example 2 | 1:1:0 | Pressure-less sintering 1500°C | 60 | 1.44 |
| Example 9 | 1:1:0 | Hot pressing 2000°C, 40 MPa | 20 | 3.18 |
| Example 10 | 1:1:5 | | 60 | 3.19 |

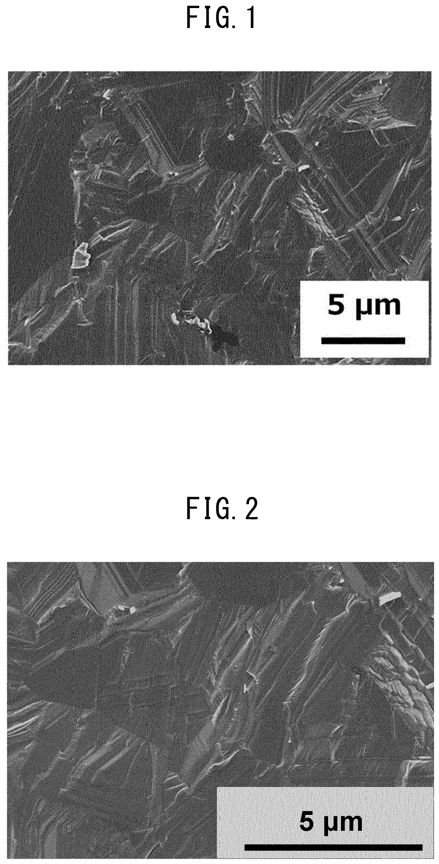

SEM micrographs of cross-sections of the sintered bodies obtained in Examples 9 and 10 are respectively shown in Figs. 1 and 2.

SiC sintered bodies having bulk density of 3.18 g/cm³ or more and free of voids or grain boundaries observed in cross-sections thereof were obtained in both Examples 9 and 10.

### <Example 11>

An SiC-Si₃N₄ composite sintered body having a bulk density of 2.60 g/cm³ was obtained by adding Si₃N₄ powder (SN-E10, Ube Industries, Ltd.) to the same mixture of boron-doped Si nanoparticles, CNF and α-SiC powder (Si:C:SiC = 1:1:5, molar ratio) as used in Example 10 so that the amount of Si₃N₄ powder was 30% by weight of the total and carrying out pressure sintering for 120 minutes at 1850°C and 40 MPa in an Ar atmosphere using the same hot press as in Examples 9 and 10.

### <Example 12>

An SiC-AIN composite sintered body having a bulk density of 3.18 g/cm³ was obtained by adding A1N powder (Wako Pure Chemical Industries, Ltd.) to the same mixture of boron-doped Si nanoparticles, CNF and α-SiC powder (Si:C:SiC = 1:1:5, molar ratio) as used in Example 10 so that the amount of A1N powder was 10% by weight of the total and carrying out pressure sintering for 60 minutes at 2000°C and 40 MPa in an Ar atmosphere using the same hot press as in Examples 9 to 11.

### <Example 13>

The same mixture of boron-doped Si nanoparticles, CNF and α-SiC powder (Si:C:SiC = 1:1:5, molar ratio) as used in Example 10 was filled into a molding mold followed by carrying out uniaxial pressure molding. A SiC sintered body having a bulk density of 3.00 g/cm³ was obtained by carrying out sintering for 60 minutes at 2150°C in an Ar atmosphere on the resulting compact using a carbon furnace.

### <Example 14>

An SiC sintered body having a bulk density of 3.19 g/cm³ was obtained by using the same hot press as Examples 9 to 12 to carry out pressure sintering for 60 minutes at 2000°C and 40 MPa in an Ar atmosphere on the same mixed compact of boron-doped Si nanoparticles, CNF and α-SiC powder as used in Example 13 (Si:C:SiC = 1:1:5, molar ratio).

### <Examples 15 to 18>

SiC-CF composite sintered bodies of Examples 15 to 18 were obtained by adding the same mixture of boron-doped Si nanoparticles, CNF and α-SiC powder (Si:C:SiC = 1:1:5, molar ratio) as used in Example 10 to pitch-based carbon fibers having thermal conductivity of 900 W/(m·K), volume resistivity of 1.5 × 10⁻⁶ Ω·cm, length of 250 µm and diameter of 10µm (XN-100-20M, Nippon Graphite Fiber Co., Ltd.) so that the amount of the mixture of boron-doped Si nanoparticles, CNF and α-SiC powder was 5% by weight, 10% by weight, 20% by weight or 30% by weight of the total and carrying out pressure sintering for 60 minutes at 2000°C and 40 MPa in an Ar atmosphere using the same hot press as Examples 9 to 12. The bulk densities of the sintered bodies were 3.10 g/cm³ , 3.02 g/cm³, 2.86 g/cm³ and 2.70 g/cm³, respectively.

### <Comparative Example 2>

β-SiC was obtained in the same manner as Example 1 with the exception of using Si particles (average particle diameter: 200 nm) obtained by dispersing micron order Si particles obtained by crushing (Nisshin Kasei Co., Ltd., particle diameter: 0.3 µm to 3.0 µm) in isopropyl alcohol and further crushing for 30 minutes with a bead mill (Aimex Corp., Type RMB, zirconia beads: 0.2 mm diameter φD50) instead of Si nanoparticles. The temperature at which an endothermic peak was observed on a DTA curve was 1366°C and crystal size as determined by powder X-ray diffractometry was 236 angstrom. When compared with Comparative Example 1, the reaction temperature was the same and a decrease in the reaction temperature like that of Example 1 was not observed.

### <Example 19>

β-SiC was obtained in the same manner as Example 1 with the exception of using Si particles (average particle diameter: 126 nm) obtained by dispersing micron order Si particles obtained by crushing (Nisshin Kasei Co., Ltd., particle diameter: 0.3 µm to 3.0 µm) in isopropyl alcohol and further crushing for 20 minutes with a bead mill (Aimex Corp., Type RMB, zirconia beads: 0.1 mm diameter φD50) instead of Si nanoparticles. The temperature at which an endothermic peak was observed on a DTA curve was 1352°C and crystal size as determined by powder X-ray diffractometry was 233 angstrom. When compared with Comparative Example 1, although a decrease was observed in the reaction temperature, the decrease in reaction temperature was not as great as that of Example 1.

### <Example 20>

β-SiC was obtained in the same manner as Example 1 with the exception of using Nanogram (trade mark) Si Nanoparticle-Containing Ink (dopant-free, average particle diameter: 65 nm, Item No. nSol-3002) for the Si nanoparticles. The temperature at which an endothermic peak was observed on a DTA curve was 1333°C and crystal size as determined by powder X-ray diffractometry was 223 angstrom. When compared with Comparative Example 1, a definite decrease was observed in the reaction temperature and effects similar to those of Example 1 were obtained.

## Claims

1. A silicon carbide production method, comprising: sintering a composition at least containing silicon nanoparticles having an average particle diameter of less than 200 nm and a carbon-based material.

2. The production method according to claim 1, wherein the silicon nanoparticles are doped with boron.

3. The production method according to claim 2, wherein the boron-doped silicon nanoparticles contain boron within a range of 10¹⁸ atoms/cm³ to 10²² atoms/cm³.

4. The production method according to any one of claims 1 to 3, wherein the carbon-based material is fibrous carbon.

5. The production method according to claim 4, wherein the fibrous carbon consists of carbon nanofibers having a diameter of 100 nm to 900 nm.

6. The production method according to any one of claims 1 to 5, wherein the composition further contains a third component selected from the group consisting of silicon particles, silicon carbide particles, silicon nitride particles, silica particles, aluminum carbide particles, aluminum nitride particles, alumina particles, boron nitride particles, boron oxide particles, boron carbide particles, carbon fibers and mixtures thereof.

7. The production method according to any one of claims 4 to 6, wherein thermal conductivity of the fibrous carbon is 80 W/(m·K) to 1000 W/(m·K).

8. The production method according to any one of claims 4 to 7, for obtaining a silicon carbide composite material containing fibrous carbon, in which the number of moles of silicon in the silicon nanoparticles is lower than the number of moles of carbon in the fibrous carbon.

9. A silicon carbide sintering composition at least containing silicon nanoparticles having an average particle diameter of less than 200 nm and a carbon-based material.

10. A silicon carbide composite material containing silicon carbide and fibrous carbon dispersed in the silicon carbide.
